(19) **Europäisches Patentamt / European Patent Office / Office européen des brevets**

(11) **EP 3 554 092 A1**

(12) **EUROPEAN PATENT APPLICATION**

(43) Date of publication:
**16.10.2019 Bulletin 2019/42**

(51) Int Cl.:
**H04N 21/426** (2011.01)   **H04N 21/488** (2011.01)
**H04N 21/431** (2011.01)

(21) Application number: **18305446.9**

(22) Date of filing: **12.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **InterDigital CE Patent Holdings**
**75017 Paris (FR)**

(72) Inventors:
• **BERGOT, Sébastien**
  **35576 CESSON-SÉVIGNÉ (FR)**
• **DRUGEON-HAMON, David**
  **35576 CESSON-SÉVIGNÉ (FR)**

• **FRALEU, Sébastien**
  **35576 CESSON-SÉVIGNÉ (FR)**
• **QUERRÉ, Goulven**
  **35576 CESSON-SÉVIGNÉ (FR)**
• **GENDRON, David**
  **35576 CESSON-SÉVIGNÉ (FR)**
• **STAUDER, Jurgen**
  **35576 CESSON-SÉVIGNÉ (FR)**
• **THIEBAUD, Sylvain**
  **35576 CESSON-SÉVIGNÉ (FR)**

(74) Representative: **Browaeys, Jean-Philippe et al**
**InterDigital CE Patent Holdings**
**20, rue Rouget de Lisle**
**92130 Issy-les-Moulineaux (FR)**

(54) **VIDEO SYSTEM WITH IMPROVED CAPTION DISPLAY**

(57)   The present invention relates to a video system (1) comprising:
- means for receiving a video stream comprising video data and caption data;
- a video buffer (112) for storing at least current video data;
- a first caption buffer (122) for storing current caption data;
- a video display control module (113) for controlling the display of said current video data onto a screen (210) of a display device (2);
- a first caption display control module (123) for controlling the display of said current caption data stored in the first caption buffer onto said screen;
- a second caption buffer (124) for storing a plurality of past caption data, and
- a second caption display control module (125) for controlling the display of the past caption data onto said screen independently from the display of the current caption data by the first caption display control module.

FIG.2

EP 3 554 092 A1

## Description

### 1. Technical Field

The invention relates to the field of digital television, broadcasting, video consumption for content with captioning or subtitling text. The invention relates to a video system with improved caption display.

### 2. Background Art

Subtitling and captioning refers to insertion of readable text into video images, notably broadcasting, streaming or theatre viewing. Subtitling is most frequently used as a way of translating spoken text of the audio channel or written text of the video channel into the supposed language of the consumer of the video.

Subtitling is usually cheaper than modifying the audio and video channels. Foreign films are an obvious example: without subtitles, French-speaking audiences would be unable to easily follow the plot of an English or Spanish movie, for instance. Subtitles are best-suited and most often used for pre-recorded videos, such as movies, TV shows or documentaries.

Captioning, on the other hand, refers to a service to aid deaf and hearing-impaired audiences. They are more adaptable to live broadcasts, such as news broadcasts, sports events and television shows broadcast live. Usually, captions (also called closed captions) appear as text one second or two after being spoken.

Due to their different purposes, subtitles and captions are different according to many important points. Subtitles, as the name suggests, are usually placed at the bottom of the screen. Captions on the other hand, may be placed in various locations on the screen to make clear to the audience who is speaking. This is especially useful for deaf individuals who can't rely on voice distinctions to pinpoint the speaker.

Subtitles and captions expand the potential audience and their efficiency is therefore essential for business.

Another case of captioning is interactive TV text services where plain page text is superimposed to the image.

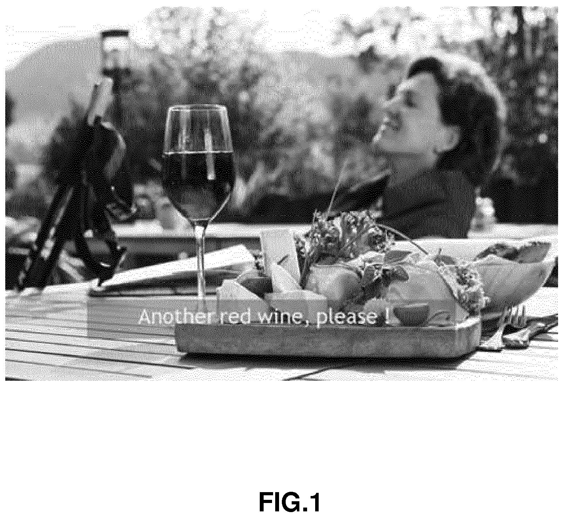

In the following, the term captions is used to designate subtitles, closed captions, chat messages, text services and other similar services. The display of the captions is generally synchronized with the display of the video data. **Figure 1** illustrates an example of captioning inserted in an image.

The captions are generally generated according to at least two parameters linked to the readability and the understanding of the captions by the viewer. These parameters are:

- the time required for reading (reading time) the words of the captions; this time is estimated at approximately 15 characters per second or approximately 1 line every 2 seconds or 1,5 lines every 3 seconds and so on; and
- the maximum number of letters and spaces that can be written on the screen.

These parameters are generally determined for a viewer both mastering the language and being attentive to the program, that is to say able to read and understand the text in the allotted time (time of presence of the captions on the screen).

But, in some circumstances, the scrolling of the captions may be too fast and does not allow the viewer to understand the text. This is particularly the case for a public not mastering the language sufficiently. It is the same if the viewer is distracted at a given moment: he can then "miss" a caption. Even simpler, the user may not have understood only a part of the text (a name, a number) or need to re-read the previous captions to fully understand the text.

The existing solution to this problem of "missed" caption is to cause the re-display of the caption. For this, the viewer needs to use the rewind functionality of the display device in order to review the "missed" captions. This operation has several disadvantages:

- it is tedious because it requires that the user performs several actions: rewind, play, pause the video;
- it harms the user experience by stopping the dynamism/rhythm of the video program, notably when it is an action movie;
- each caption is re-displayed sequentially such that it is not possible to have the complete display of a dialog; and
- above all, this solution is not appropriate when several spectators with different capacities to acquire and understand the subtitles are present.

The problem is even more acute when the display moment of a caption is in the past and when the user has only a vague idea of the time position of this moment. It is then not possible to find it simply and make a skip in the video program at this moment.

Some methods have been developed for alleviating a part of these disadvantages but they are satisfactory.

The patent document US 7 826 714 discloses a method for controlling subtitle and caption information in video comprising the steps of receiving video data stream, determining subtitles in video data stream, storing the subtitles in a memory, receiving a subtitle review request, pausing play of the video stream based on the request, displaying at least one subtitle based on the request and resuming play of the video data stream. According to this method the user makes the request via a dedicated menu displayed on a screen. The results of the request are displayed, for example as a list, in a window displayed on the screen. Play of the video data stream is resumed after the expiration of a determined length of time for pausing the video data stream or the user presses a button on a remote control once he is finished reading the displayed subtitles and captions.

Some problems still remain with this method. The play of the video stream is paused during the subtitle review. As a consequence, this solution is not appropriate when several spectators with different capacities to acquire and understand the subtitles are present. The results of the request are different past captions which are disconnected such that it is not easy to find again the thread of the dialogs. In addition, you need to remember at least one word of the past captions in order to launch the query. It can not be possible when the viewer completely misunderstood the dialog.

## 3. Summary of Invention

The present disclosure provides new facilities for the display of captions (subtitles or closed captions) which enables displaying past captions while keeping displaying the current caption and the current video data.

The present disclosure relates to a video system comprising:

- receiving means for receiving a video stream comprising at least video data and caption data;
- a video buffer for storing at least current video data;
- a caption buffer for storing current caption data;
- a video display control module for controlling the display of said current video data onto a screen of a display device;
- a first caption display control module for controlling the display of said current caption data onto said screen;

wherein it further comprises

- a second caption buffer for storing a plurality of past caption data; and
- a second caption display control module for controlling the display of said plurality of past caption data stored in said second caption buffer onto said screen independently from the display of the current caption data by the first caption display control module.

The past caption data designate the last caption data before the current caption data.

The use of distinct storage devices for storing the past caption data and the current caption data and the use of distinct display control modules for displaying them allows to display the last captions without stopping the display of the current caption and the current video data, which is appreciable in the case of several viewers. For example, when two people having two different levels in English are viewing an English video, the viewer having the lowest level in English can have access to the past captions without disturbing the other viewer since the video is not stopped.

According to an embodiment, the second caption buffer is arranged to store at least N last caption data, with N>2.

According to an embodiment, the second caption buffer is further arranged to store, in addition to the past caption data, the current caption data. The second caption display control module can thus control the display of the current caption data as well as the display of the past caption data all stored in the second caption buffer on the screen of the display device. It allows the user to visualize immediately the current caption data together with the past caption data.

According to an embodiment, the first caption display control module is arranged to control the display of the current caption data in a first window of the screen and the second caption display control module is arranged to control the display of the past caption data and, when appropriate, the current caption data in a second window of the screen distinct from the first window.

According to an embodiment, the second caption display control module is arranged to highlight the current caption data in said second window. It allows the viewer to locate the current caption data versus the past caption data.

According to an embodiment, the first window is displayed on the bottom edge of the screen and the second window is displayed on the right edge of the screen.

According to an embodiment, the first window and/or the second window are displayed transparently over the images of the video data displayed on the screen.

According to an embodiment, the past caption data and, when appropriate, the current caption data are displayed as a scrolling list in the second window wherein the user can navigate.

According to an embodiment, the second caption display control module is arranged to display a user interface for inputting a text word to be searched in the past caption data, to search for said text word in the past caption data stored in the second caption buffer and to display the results of the search in said second window.

According to an embodiment, the video display control module is arranged to generate a presentation time stamp when it displays current video data, said presentation time stamp being associated with said current video data and said current caption data, and wherein said presentation time stamp is stored together with its associated caption data in said second caption buffer.

## 4. Brief description of the drawings

The invention can be better understood with reference to the following description and drawings, given by way of example and not limiting the scope of protection, and in which:

- Figure 1, already described, is an example of inserted captioning in an image;

- Figure 2 is a schematic view of a system according to the invention;

- Figure 3 is an example of insertion of captions in an image in accordance with the invention; and

- Figure 4 is another example of insertion of captions in an image in accordance with the invention.

**5. Description of embodiments**

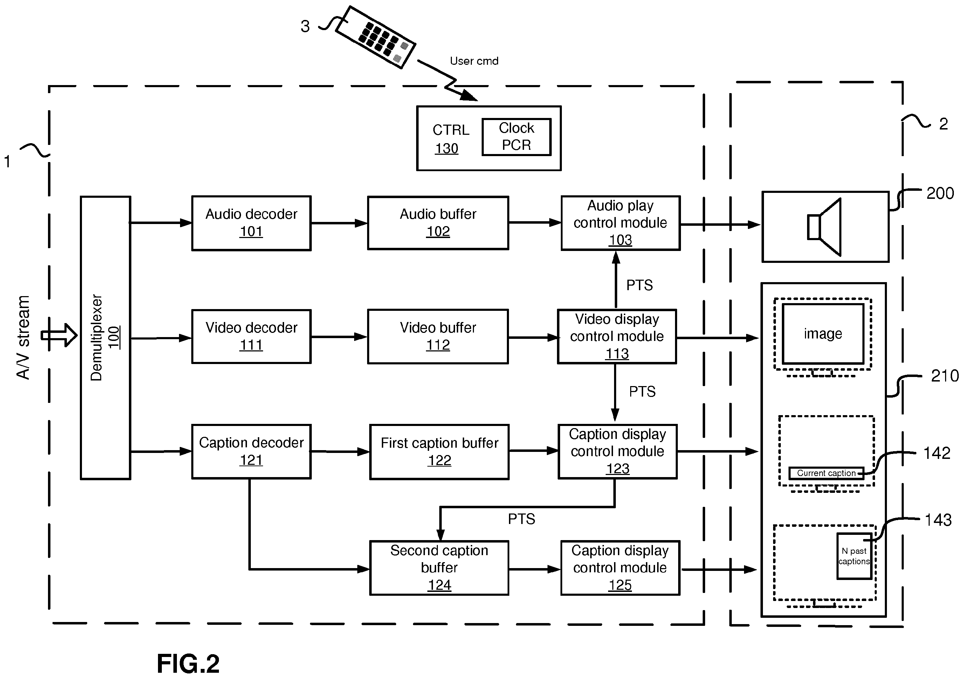

Figure 2 illustrates one embodiment of a video system 1 for controlling caption information in accordance with one aspect of the invention. This system may be arranged into a dedicated apparatus, for example a set-top box, connected to a display device, for example a TV screen, or directly into the display device.

In the example of Figure 2, the system 1 is connected to a display device 2 comprising a screen 210 for displaying video content and loudspeakers 200 for playing audio content. An audio video (A/V) stream is received by the video system 1 and is displayed on the display device 2. The A/V stream comprises audio data, video data and subtitle and/or caption data. The subtitle and caption data, hereinafter designated by the term "caption", may be in, for example, MPEG format, text format, XML or HTML format, as are well known in the art.

The A/V stream may be received from networks including cable, satellite, the Internet (and other Internet Protocol or "IP" based networks), wireless and over-the-air networks. The AN stream includes, for example, movies and television programs. The A/V stream may be provided by broadcast video services (including pay-per-view and conventional access) or individual, time-independent video services such as video-on-demand (VOD). In this embodiment, the video system may be arranged in a set-top box used for receiving the A/V stream or in the display device connected to the set-top box.

The AN stream may also come from a portable storage media such as DVD or videocassette connected to the video system 1. In this case, the video system may be arranged in the portable media or in the display device connected to the portable media.

Referring to figure 2, the A/V stream is first processed by a demultiplexer 100 for separating the audio data, the video data and the captions included in the AN stream. The demultiplexer 100 is controlled by a control circuit 130.

The data included in the A/V stream are generally encoded. The system thus comprises an audio decoder 101, a video decoder 111 and a caption decoder 121 that decode respectively the audio data, the video data and the caption data issued by the demultiplexer 100 under the control of the control circuit 130.

Each time video data (current video data) are decoded, they are stored in a video buffer 112 connected to the video decoder 111. Likewise, each time audio data (current audio data) and caption data (current caption data) are decoded, they are stored respectively in an audio buffer 102 and a first caption buffer 122. The audio buffer 102 and the first caption buffer 122 are respectively connected to the audio decoder 101 and the caption decoder 121.

The decoding and storing process in the decoders 101, 111 and 121 is advantageously synchronized on a clock reference, called PCR (for Program Clock Reference) delivered by the control circuit PCR.

The video buffer 112 is sized to store a current video frame. The audio buffer 102 and the first caption buffer 122 are sized to store the corresponding audio data and caption data.

The video system 1 further comprises a video display control module 113 for controlling the display, on the screen 210, the display device of the current video data stored in the video buffer 112. It also comprises an audio play control module 103 for controlling the play, on the loudspeakers 200, of the current audio data stored in the audio buffer 102 and a first caption display control module 123 for controlling the display, on the screen 210, of the current caption data stored in the first caption buffer 122. The modules 103, 113 and 123 are controlled by the control circuit 130 and synchronized on the clock reference PCR. The video display control module 113 outputs a presentation time stamp called PTS, derived from the clock reference PCR, which characterizes the time stamp when the current video data (current frame) are displayed on the screen 210. The video display control module 113 delivers the time stamp PTS to the audio control module 103 and the first caption display control module 123 in order to synchronize the play of the current audio data and the display of the current caption data on the screen 210.

According to one aspect of the invention, the system 1 further comprises a second caption buffer 124 for storing a plurality of past caption data and a second caption display control module 125 for controlling the displaying of the past caption data onto the screen 210 independently from the display of the current caption data by the first caption display control module 123.

The second caption buffer 124 is arranged to store at least N caption data, with N>2. Since the size of the caption data may be variable, the second caption buffer 124 is sized to store N caption data of maximal size. In a variant, the number of bytes (size) of the second caption buffer 124 is defined as follows:

$$S_{124} = N\,(k{*}L)$$

wherein $S_{124}$ is the size of the second caption buffer 124, L is the mean size of a caption and k is a multiplication factor. The aim of the factor k is to cope with with subtitle size variation and is for example equal to 1.5 or 2.

The second caption buffer 124 is FIFO (First In - First Out) memory such that it always includes the N last captions.

The use of the second caption buffer 124 and the second caption display control module 125 allows to display past caption data without stopping the display of the video data stored in the video buffer 112 and the display of the current caption data stored in the first caption buffer 122. The display of the past caption data is disconnected from the display of the current video data. This can be valuable when two viewers with two different understanding levels of the dialogues are viewing the video data displayed on the screen. The viewer with the lowest level can read, where necessary, the past caption data without disturbing the other viewer.

According to an embodiment, the first caption display control module 123 is arranged to display the current caption data in a first window 142 of the screen 210 and the second caption display control module 125 is arranged to control the display of the past caption data in a second window 143 of the screen 210 distinct from the first window 142.

The windows 142 and 143 are displayed on the screen 210 by pressing a dedicated button on a remote control 3 communicating with the control circuit 130. The window 142 is for example displayed by pressing on a "subtitle" button and the window 143 is displayed by pressing on "past subtitles" button of the remote control 3.

As shown on the figure 2, the first window 142 is for example displayed on the bottom edge of the screen 210 and the second window 143 is displayed on the right edge of the screen 210. A window designates a dedicated area of the screen 210.

The second window 143 is advantageously sized to display the N past caption data stored in the second caption buffer 124. As a variant, the window 143 is sized to display M past caption data, with N<M≤2.

The past caption data are sequentially displayed in the window 143 a scrolling list with the most recent past caption data being placed at the bottom of the list.

Advantageously, the second caption buffer is arranged to store, in addition to the past caption data, the current caption data. Thus the current caption data are stored both in the first caption buffer 122 and in the second caption buffer 124. The current caption data are thus simultaneously displayed in the first window 142 and in the second window 143.

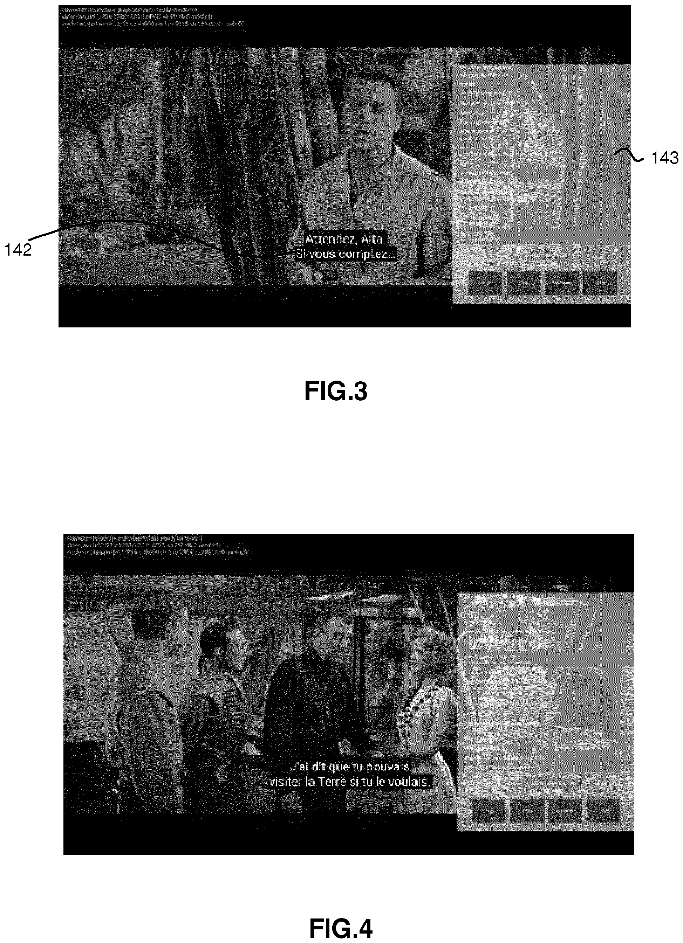

This embodiment is illustrated by **Figure 3.** The current caption data displayed in the window 142 is "Attendez, Alta, Si vous comptez...". The window 143 displays a plurality of past caption data as a list. It also displays the current caption data at the end of the list, after the most recent past caption data.

Advantageously, the current caption data is highlighted in the second window 143. In the example, the current caption data are highlighted by a blue strip.

In a variant, the current caption data are written in a different color or a different font in the window.

Advantageously, the first window and/or the second window is (are) displayed transparently over the images of the video data displayed on the screen so as not to hide the video data displayed on the screen.

In an embodiment, the past caption data displayed on the second window 143 are used to skip or rewind the video by selecting a past caption data in the window 143.

To this end, the second caption buffer 124 is arranged to store, in addition to the past caption data, the associated presentation time stamp PTS delivered by the video display control module 113.

In this embodiment, past video data corresponding to past video frames (frames before the current frames) are present in a given memory. This memory may be present in a remote server outputting the A/V stream or in a local memory. For reasons of memory size, the past video data are stored in the encoded format in the memory. If the A/V stream come from a portable storage media, such as DVD, inserted in DVD player connected to the present system or from a Hard Disk Drive HDD connected to the present system, this DVD or HDD constitutes this local memory.

The caption display control module 125 is arranged to display a user interface with at least a skip button. This user interface is for example displayed in the window 143 below the past captions as shown in Figure 3. The user can navigate through the past captions and the user interface within the window 143 via the keys ←, ↑, →, ↓, of the remote control 3.

The user can skip the video to a previous video frame by selecting the corresponding caption data in the scrolling list and then selecting the skip of the user interface.

This is illustrated by the **Figure 4.** The selected caption data in the scrolling list is selected by the user (the selected caption data is identified by a blue strip in the window 143) and the skip function is then launched by clicking on the skip button.

When the past video data are stored internally in a local memory, the display of the past video frames is managed as a time shift function in a classical set-top box. The retrieval of the past video frames can be carried out by different ways. The PTS of the past video frames may be stored in the local memory.

As a variant, the difference between the PTS of the current video data and the PTS of the previous video data stored in the second caption buffer 124 is computed and the skip time (or rewind time) is determined. The previous video data can thus be retrieved in the internal memory based on this skip time.

When the previous video data are not stored locally but on a remote server, the retrieval of the desired previous video data can be done by sending a "seek" request to the remote server with the skip time.

Functions other than the skip function may be proposed in the user interface of the window 143. The user interface may propose to input a text word to be searched in the past caption data. The system is thus arranged to search for the text word in the past caption data stored in the second caption buffer and to display the results of the search in the window 143. A "find" button and an area where inputting the text word are integrated in the user interface to implement this function. A "clear" button is also provided in the user interface to clear the word to be search. These buttons are visible on the Figures 3 and 4.

The system can also be arranged to display a translation of the current caption data or a selected caption data. The translations may be already present in the A/V stream. If not, the system is arranged to manage the translation of the caption data by a remote translation provider. A "translate" button is integrated in the user interface to implement this function. This button is visible on the Figures 3 and 4.

Thanks to the embodiments of the invention, a viewer can make appear past caption data without disturbing the display of the video stream. He can thus re-read globally all the past caption data in order to improve its understanding of the dialogues. The user may choose at any time to display or not the past caption data by pressing a button on the remote control. The user can navigate (skip) in the video stream by clicking on a specific past caption data of the list of past caption data displayed on the screen. The user can also retrieve a video frame by searching a word (of the subtitles associated to this frame) in the past caption data.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

**Claims**

1. Video system (1) comprising:

   - receiving means (100, 111,121) for receiving a video stream comprising at least video data and caption data;
   - a video buffer (112) for storing at least current video data;
   - a first caption buffer (122) for storing current caption data;
   - a video display control module (113) for controlling the display of said current video data stored in the video buffer (112) onto a screen (210) of a display device (2); and
   - a first caption display control module (123) for controlling the display of said current caption data stored in the first caption buffer (122) onto said screen (210);

wherein it further comprises

   - a second caption buffer (124) for storing a plurality of past caption data; and
   - a second caption display control module (125) for controlling the display of said plurality of past caption data stored in the second caption buffer (124) onto said screen (210) independently from the display of the current caption data by the first caption display control module.

2. Video system according to claim 1, wherein the second caption buffer (124) is arranged to store at least N last caption data, with N>2.

3. Video system according to claim 1 or 2, wherein the second caption buffer (124) is further arranged to store the current caption data.

4. Video system according to any one of claims 1 to 3, wherein the first caption display control module (123) is arranged to display the current caption data in a first window (142) of said screen (210) and wherein the second caption display control module (125) is arranged to control the display of the past caption data and, when appropriate, of the current caption data in a second window (143) of the screen (210) distinct from the first window (142).

5. Video system according to claim 4, wherein the second caption display control module (125) is arranged to highlight the current caption data in said second window (143).

6. Video system according to claim 4 or 5, wherein the first window (142) is displayed on the bottom edge of the screen (210) and the second window (143) is displayed on the right edge of the screen (210).

7. Video system according to claim 6, wherein the first window (142) and/or the second window (143) are displayed transparently over the images of the video data displayed on the screen.

8. Video system according to any one of the claims 4 to 7, wherein the past caption data and, when appropriate, the current caption data are displayed as a scrolling list in the second window (143).

9. Video system according to any one of the claims 4 to 8, wherein the second caption display control module is arranged to display a user interface for inputting a text word to be searched in the past caption data, to search for said text word in the past caption data stored in the second caption buffer (124) and to display the results of the search in said second window (143).

**10.** Video system according to any one of preceding claims, wherein the video display control module (113) is arranged to generate a presentation time stamp when it displays current video data, said presentation time stamp being associated with said current video data and said current caption data, and wherein said presentation time stamp is stored together with its associated caption data in said second caption buffer (124).

**FIG.1**

FIG.2

Demultiplexer 100 — A/V stream

Audio decoder 101 → Audio buffer 102 → Audio play control module 103 → 200

Video decoder 111 → Video buffer 112 → Video display control module 113 → 210 — image

Caption decoder 121 → First caption buffer 122 → Caption display control module 123 → 142 — Current caption

Second caption buffer 124 → Caption display control module 125 → 143 — N past captions

PTS

CTRL 130 — Clock PCR

User cmd

3 — 1 — 2

FIG.3

FIG.4

## EUROPEAN SEARCH REPORT

Europäisches
Patentamt
European
Patent Office
Office européen
des brevets

Application Number

EP 18 30 5446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/316046 A1 (YAMAZAKI MASAHIRO [JP] ET AL) 24 December 2009 (2009-12-24) | 1-8,10 | INV.<br>H04N21/426<br>H04N21/488<br>H04N21/431 |
| Y | * paragraph [0064] - paragraph [0158]; figures 2,5,6,7,16 * | 9 | |
| X | US 2008/292272 A1 (YAMAZAKI MASAHIRO [JP] ET AL) 27 November 2008 (2008-11-27) | 1-8,10 | |
| Y | * paragraph [0110] - paragraph [0320]; figures 1-5,7,33 * | 9 | |
| Y | US 2015/016801 A1 (HOMMA FUMINORI [JP] ET AL) 15 January 2015 (2015-01-15) * paragraph [0139]; figure 30 * | 9 | |
| Y | US 2010/229078 A1 (OTSUBO YUTAKA [JP] ET AL) 9 September 2010 (2010-09-09) * paragraph [0004] * | 9 | |
| Y | US 2009/067812 A1 (PARK SEUNG-KEUN [KR]) 12 March 2009 (2009-03-12) * figure 2 * | 9 | |

TECHNICAL FIELDS
SEARCHED (IPC)

H04N

The present search report has been drawn up for all claims

| Place of search | Date of completion of the search | Examiner |
|---|---|---|
| The Hague | 23 May 2018 | Santos Conde, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5446

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2018

| Patent document cited in search report | | Publication date | Patent family member(s) | | Publication date |
|---|---|---|---|---|---|
| US 2009316046 | A1 | 24-12-2009 | CN 101616333 A<br>JP 4569673 B2<br>JP 2010010744 A<br>KR 20100002103 A<br>US 2009316046 A1 | | 30-12-2009<br>27-10-2010<br>14-01-2010<br>06-01-2010<br>24-12-2009 |
| US 2008292272 | A1 | 27-11-2008 | KR 20080103016 A<br>US 2008292272 A1<br>US 2013077939 A1 | | 26-11-2008<br>27-11-2008<br>28-03-2013 |
| US 2015016801 | A1 | 15-01-2015 | CN 104081784 A<br>JP 6044553 B2<br>JP WO2013118387 A1<br>US 2015016801 A1<br>WO 2013118387 A1 | | 01-10-2014<br>14-12-2016<br>11-05-2015<br>15-01-2015<br>15-08-2013 |
| US 2010229078 | A1 | 09-09-2010 | CN 101816174 A<br>JP WO2009044818 A1<br>US 2010229078 A1<br>WO 2009044818 A1 | | 25-08-2010<br>10-02-2011<br>09-09-2010<br>09-04-2009 |
| US 2009067812 | A1 | 12-03-2009 | NONE | | |

EPO FORM P0459

For more details about this annex : see Official Journal of the European Patent Office, No. 12/82

**REFERENCES CITED IN THE DESCRIPTION**

**Patent documents cited in the description**

• US 7826714 B